# EUROPEAN PATENT APPLICATION

(11) **EP 3 366 861 A1**
(43) Date of publication of application: **29.08.2018**
(21) Application number: 18158972.2
(22) Date of filing: 27.02.2018
(51) Int. Cl.: E04F 13/00, D06N 7/00, E04F 13/077, D06N 3/18, D06N 3/06

(54) **WALL COVERING AND CORRESPONDING MANUFACTURING METHOD AND PLANT**

(30) Priority: 27.02.2017 IT 201700022004
(71) Applicant: Resinflex S.r.L., 10148 Torino (IT)
(72) Inventor: ROLANDO, Renato, 10148 TORINO (IT)
(74) Representative: Maccagnan, Matteo

(57) **Abstract**

Wall covering (1) having an outer surface (2) and an inner surface (3), which is opposite the outer surface (2); the wall covering (1) being provided with: an outer layer (4) made of a first plastic material and having the outer surface (2); an intermediate layer (5) made of a second plastic material and being in direct contact with the outer layer (4); a connection layer (6) made of a third plastic material and being in direct contact with the intermediate layer (5); and a noble layer (7), which is in direct contact with the connection layer (6), consists of a fabric comprising wool fibres and has the inner surface (3).

## Description

### PRIORITY CLAIM

*This application claims priority from Italian Patent Application No.* 102017000022004 *filed on 27*/*02*/*2017.*

### TECHNICAL FIELD

The present invention relates to a wall covering and to the corresponding manufacturing method and plant.

### PRIOR ART

Wall coverings have been manufactured for many years to be applied (glued) to the inner walls of a building, both for aesthetic reasons (namely, to make the walls look better) and for functional reasons (generally, to simplify the cleaning of the walls and/or to improve the acoustics of the environment or the thermal and hygrometric characteristics).

For example, the company Resinflex® has been producing and marketing for several years a wall covering that has the commercial name of Aphonflex® and meets the functional requirements (protection - hygiene - maintenance - acoustics) and the aesthetic requirements of hotels, offices, hospitals, public places. The Aphonflex® wall covering is washable, has dimensional stability, resistance to aging and abrasion and colour stability, besides being flame retardant and fire retardant. Furthermore, the Aphonflex® wall covering is made of different layers of plastic material (in particular PVC-based) that have different physical characteristics (mainly thickness and density) to create a balance between acoustic absorption and acoustic reflection in order to optimize the acoustics of the closed environment lined with this wall covering.

The patent application DE102012022490A1 represents the nearest state of the art and describes a wall covering comprising an intermediate supporting layer, an outer wear-resistant layer made of textile material and an inner layer made of cork, of cloth or of felt.

### DESCRIPTION OF THE INVENTION

The object of the present invention is to provide a wall covering and corresponding manufacturing method and plant, which allow improving the acoustic, thermal and hygrometric characteristics with respect to the currently commercially available wall coverings of the same category.

According to the present invention, a wall covering and corresponding manufacturing method and plant are made according to what is claimed by the attached claims.

The claims describe preferred embodiments of the present invention, thus forming an integral part of the present description.

### BRIEF DESCRIPTION OF THE DRAWINGS

The present invention will now be described with reference to the accompanying drawings showing an example of nonlimiting embodiment, in which:
Figure 1 is a schematic and cross-sectional view of a wall covering manufactured according to the present invention; and
Figure 2 is a schematic view of a manufacturing plant producing the wall covering of Figure 1.

### PREFERRED EMBODIMENTS OF THE INVENTION

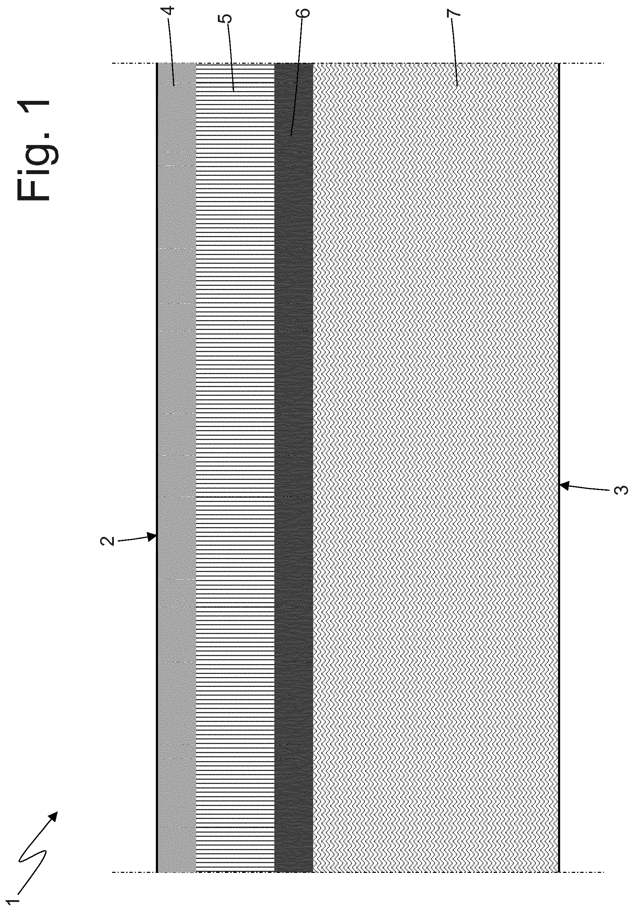

In Figure 1, the reference number 1 indicates as a whole a wall covering that is suitable to be applied (glued) to the inner walls of a building, either for aesthetic reasons (namely to make the walls look better) or for functional reasons (in particular to simplify the cleaning of the walls and to improve the acoustics, the thermal response and the hygrometric response of the environment).

The wall covering 1 is washable, has dimensional stability, resistance to aging and abrasion and colour stability, besides being flame retardant and fire retardant. Moreover, the wall covering 1 is made of several layers to create an optimal balance between acoustic absorption, thermal response, hygrometric response and acoustic reflection in order to optimize the acoustics of the closed environment lined with the wall covering 1.

The wall covering1 has an outer surface 2 (i.e. a surface which, in use, is in sight) and an inner surface 3 (i.e. a surface which, in use, is glued to a wall and therefore is hidden from view), which is opposite the outer surface 2. Preferably, a relief pattern and a coloured print are impressed on the outer surface 2.

The wall covering 1 comprises an outer layer 4 (also referred to as "skin"), which is made of spread plastic material (in particular based on fire retardant PVC) and has the outer surface 2; the outer layer 4 is homogeneous (i.e. is entirely made of the same evenly distributed plastic material) and is made of a more valuable plastic material, as it is the only component of the wall covering 1 that is in sight after application to a wall. In other words, the plastic material of the outer layer 4 is spread (i.e. is not a fabric) and is therefore homogeneous, is perfectly isotropic (i.e. has the same properties in all directions) and has a constant density. According to a preferred embodiment, the outer layer 4 is compact (i.e. not expanded), thus having no empty spaces inside.

The wall covering 1 comprises an intermediate layer 5 (also called "filler") which is made of fire retardant plastic material (in particular PVC-based), is in direct contact with the outer layer 4 and is homogeneous (i.e. is entirely made of the same evenly distributed plastic material); preferably, the intermediate layer 5 is made of a less valuable plastic material, having a lower density than the plastic material used in the outer layer 4. In other words, the plastic material of the intermediate layer 5 is spread and is therefore homogeneous, is perfectly isotropic (i.e. has the same properties in all directions) and has a constant density.

According to a preferred embodiment, the intermediate layer 5 is expanded, namely the plastic material composing the intermediate layer 5 has a lower density than the plastic material composing the outer layer 4. For example, this result is obtained by adding to the plastic material (before its spreading) some expanding agents, which at high temperatures release the gases causing the formation of empty spaces, which reduce the density within the intermediate layer 5.

The wall covering 1 comprises a connection layer 6, which is made of spread plastic material (in particular based on fire retardant PVC), is in direct contact with the intermediate layer 5 on the opposite side with respect to the outer layer 4 and is homogeneous (i.e. is entirely made of the same evenly distributed plastic material). In other words, the plastic material of the connection layer 6 is spread and therefore is homogeneous, is perfectly isotropic (i.e. has the same properties in all directions) and has a constant density.

Finally, the wall-covering 1 comprises a noble layer 7, which has acoustic functions (in particular but not only sound-absorbing), thermal insulation and humidity regulation functions, consists of a fabric comprising wool fibres, is in direct contact with the connection layer 6 on the opposite side with respect to the intermediate layer 5 and has the inner surface 3 (namely, once the wall covering 1 has been laid, the noble layer 7 is in direct contact with the wall). The noble layer 7 can be made of wool felt or woollen fabric. The noble layer 7 consists of at least 40% of wool fibres, namely the percentage of wool fibres in the noble layer 7 is not less than 40%. More generally, the percentage of wool fibres in the noble layer 7 can vary from 40% to 100%, i.e. the noble layer 7 can be made of a wool blend (obtained by mixing the wool fibre with cotton or artificial textile fibres such as e.g. viscose or rayon,) or of pure wool.

The outer layer 4 essentially has an aesthetic function and a hygienic function, as it is the only part of the wall covering 1 that is in sight. The intermediate layer 5 essentially has a filler function to give greater volume and softness to the wall covering 1. The connection layer 6 essentially has the function of making the noble layer 7 adhere to the intermediate layer 5, namely has the function of "gluing" the noble layer 7 to the intermediate layer 5. The noble layer 7 essentially has the function of giving optimal acoustical, thermal and hygrometric characteristics to the wall covering 1.

The (PVC-based) plastic material composing the outer layer 4 can have a different formulation from the (PVC-based) plastic material composing the intermediate layer 5 and the (PVC-based) plastic material composing the connection layer 6. Consequently, the characteristics (plasticity, mechanical resistance, fireproofing, expansion capacity) of the outer layer 4 are different from those of layers 5 and 6. Analogously, the (PVC-based) plastic material composing the connection layer 6 may have a formulation different from the (PVC-based) plastic material composing the intermediate layer 5. Consequently, the characteristics (plasticity, mechanical resistance, fire retardants, expansion capacity) of the connection layer 6 are different from those of the intermediate layer 5. In fact, the outer layer 4 must be valuable (being in sight) and of relatively high density, the intermediate layer 5 may be less valuable and must have a lower density than the outer layer 4, while the connection layer 6 must mainly have excellent binding properties, i.e. it must guarantee optimal adhesion to the noble layer 7.

Finally, the intermediate layer 5 is thicker than the outer layer 4 and the connection layer 6. Approximately, the outer layer 4 and the connection layer 6 have the same thickness, whereas the intermediate layer 5 has at least a double thickness compared to the outer layer 4 and the connection layer 6. According to a possible embodiment, the intermediate layer 5 has at least a double thickness compared to the outer layer 4 and, at the same time, the density of the outer layer 4 is at least 1.5 times the density of the intermediate layer 5.

Preferably, processed wool is used for the production of the noble layer 7 to obtain a uniform thickness, so that once the wall covering 1 has been applied (glued) to the wall there are no differences in thickness.

According to a possible embodiment, the wall covering 1 generally has a thickness of between 2.5 and 5 mm and the noble layer 7 made of wool blend or pure wool has a thickness of between 1.5 and 3.5 mm. In particular, the thickness of the noble layer 7 made of wool blend or pure wool has a thickness of between 50% and 75% of the overall thickness of the wall covering 1. Moreover, according to a preferred embodiment, the thickness of the noble layer 7 made of wool blend or pure wool is at least three times the thickness of the outer layer 4 and is at least twice the sum of the thickness of the outer layer 4 and of the thickness of the intermediate layer 5.

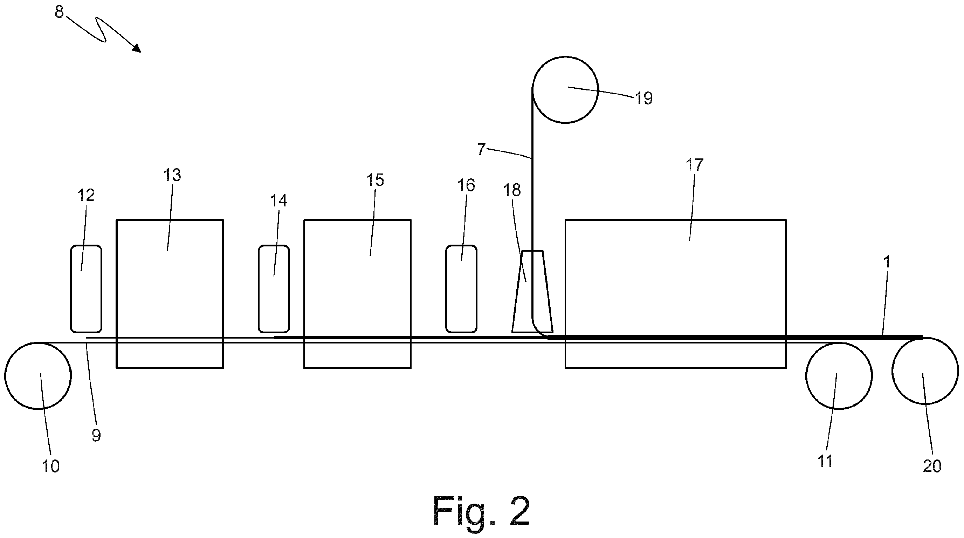

According to a possible embodiment, the wall covering 1 generally has a density of 600-800 grams/m2 (or 600-900 grams/m2); generally, the noble layer 7 has a density of 240-280 grams/m2 (or 240-380 grams/m2), while the three layers 4, 5 and 6 of plastic material (based on fire retardant PVC) have an overall density of 350-500 grams/m2. In Figure 2, the reference number 8 indicates as a whole a manufacturing plant for the wall covering 1.

The manufacturing plant 8 uses a release liner sheet 9 during the processing cycle which temporarily supports the wall covering 1 during the application and the gelatinization of the various layers 4-7 and is recovered at the end of the processing cycle (i.e. at the end of the processing cycle it is removed from the wall covering 1 to be reused in a new processing cycle). Conveyor means unwind the release liner sheet 9 from a reel 10 arranged at the beginning of the manufacturing plant 8 and wrap the release liner sheet 9 in a reel 11 arranged at the end of the manufacturing plant 8; in this way, the conveyor means move the horizontally disposed release liner sheet 9 forward through the manufacturing plant 8.

The manufacturing plant 8 comprises a spreading device 12, which applies the outer layer 4 of plastic material on the release liner sheet 9, and an oven 13 (arranged immediately downstream of the spreading device 12) where the outer layer 4 is gelatinized.

The manufacturing plant 8 comprises a spreading device 14, which is arranged downstream of the oven 13 and applies the intermediate layer 5 of plastic material on the previously applied outer layer 4, and an oven 15 (arranged immediately downstream of the spreading device 14) where the intermediate layer 5 is gelatinized.

The manufacturing plant 8 comprises a spreading device 16, which is arranged downstream of the oven 15 and applies the connection layer 6 of plastic material on the previously applied intermediate layer 5, and an oven 17 (arranged immediately downstream of the spreading device 16) where the connection layer 6 is gelatinized.

The manufacturing plant 8 comprises an applying device 18 which applies the noble layer 7 above the previously applied connection layer 6 (still to be gelatinized); the noble layer 7 is a fabric, which is progressively unwound from a reel 19 and is then placed and pressed on top of the connection layer 6 (still to be gelatinized). According to a preferred embodiment, the applying device 18 is arranged immediately upstream of the oven 17 between the spreading device 16 and the oven 17. In this way, the noble layer 7 is applied over the connection layer 6 while the connection layer 6 is still to be gelatinized.

The inner temperature of the ovens 13, 15 and 17 is between 160°C and 210°C; in other words, the gelatinization of the layers 4, 5 and 6 takes place at a temperature between 160°C and 210°C.

The embodiments described herein may be combined without departing from the scope of protection of the present invention.

The wall covering 1 described above has numerous advantages.

First, the aforementioned wall covering 1 has acoustic performances significantly higher than the currently commercially available wall coverings of the same category; this result is obtained thanks to the presence of the noble layer 7 consisting of at least 40% of wool.

Moreover, the aforementioned wall covering 1 also has a very high thermal insulation capacity; this result is obtained thanks to the presence of the noble layer 7 consisting of at least 40% of wool.

Finally, the aforementioned wall covering 1 allows regulating the environmental humidity, helping to keep it at optimum values, thus solving the problems of the formation of mould and of the condensation due to possible thermal bridges; this result is obtained thanks to the presence of the noble layer 7 consisting of at least 40% of wool.

## Claims

1. A wall covering (1) having an outer surface (2) and an inner surface (3), which is opposite the outer surface (2); the wall covering (1) comprising:
an outer layer (4), which is the outermost portion of the wall covering (1), has the outer surface (2) and is made of an evenly distributed first spread plastic material;
an intermediate layer (5), which is in direct contact with the outer layer (4) and is made of an evenly distributed second spread plastic material; and
a noble layer (7), which is a fabric comprising wool fibres.

2. A wall covering (1) according to claim 1, wherein the fabric of the noble layer (7) consists of at least 40% of wool fibres, and in particular the fabric of the noble layer (7) is a wool blend or pure wool.

3. A wall covering (1) according to claim 1 or 2, wherein the inner surface (3) is part of the noble layer (7), which is the innermost portion of the wall covering (1) .

4. A wall covering (1) according to claim 1, 2 or 3 and comprising a spread connection layer (6), which is made of an evenly distributed third plastic material and is interposed between the intermediate layer (5) and the noble layer (7) so that the noble layer (7) adheres to the intermediate layer (5).

5. A wall covering (1) according to claim 4 and comprising only and exclusively four layers which, from the outer surface (2) to the inner surface (3), are: the outer layer (4), the intermediate layer (5), the connection layer (6) and the noble layer (7).

6. A wall covering (1) according to claim 4 or 5, wherein:
the first plastic material, the second plastic material and the third plastic material are all PVC-based;
the first plastic material has a different formulation from the second plastic material and the third plastic material; and
the second plastic material has a different formulation from the third plastic material.

7. A wall covering (1) according to claim 4, 5 or 6, wherein:
the first plastic material approximately has the same thickness as the third plastic material; and
the second plastic material approximately has a double thickness compared to the first plastic material and to the third plastic material.

8. A wall covering (1) according to any one of claims from 1 to 7, wherein the noble layer (7) has a thickness ranging from 50% and 75% of the overall thickness of the wall covering (1).

9. A wall covering (1) according to any one of claims 1 to 8, wherein the thickness of the noble layer (7) is at least three times the thickness of the outer layer (4) and is at least twice the sum of the thickness of the outer layer (4) and of the thickness of the intermediate layer (5) .

10. A wall covering (1) according to any one of claims 1 to 9, wherein the intermediate layer (5) has a lower density compared to a density of the outer layer (4).

11. A wall covering (1) according to claim 10, wherein the outer layer (4) is compact, namely not expanded, and the intermediate layer (5) is expanded.

12. A wall covering (1) according to claim 10 or 11, wherein:
the intermediate layer (5) has at least a double thickness compared to the outer layer (4); and
the outer layer (4) has a density that is at least 1.5 times the density of the intermediate layer (5).

13. A wall covering (1) having an outer surface (2) and an inner surface (3), which is opposite the outer surface (2); the wall covering (1) comprising:
an outer layer (4), which is made of a first plastic material and has the outer surface (2);
an intermediate layer (5), which is made of a second plastic material and is in direct contact with the outer layer (4);
a noble layer (7), which is a fabric comprising wool fibres; and
a connection layer (6), which is made of a third plastic material and is interposed between the intermediate layer (5) and the noble layer (7);
wherein the first plastic material, the second plastic material and the third plastic material are all PVC-based;
wherein the first plastic material has a different formulation from the second plastic material and the third plastic material; and
wherein the second plastic material has a different formulation from the third plastic material.

14. A manufacturing method of a wall covering (1) having an outer surface (2) and an inner surface (3), which is opposite the outer surface (2); the manufacturing method comprising the steps of:
moving a release liner sheet (9) forward, which temporarily supports the wall covering (1) during the application and the gelatinization of the different layers (4, 5, 6, 7) and is recovered at the end of the processing cycle;
applying an outer layer (4) made of a first plastic material and having the outer surface (2) on the release liner sheet (9) by means of a first spreading device (12);
gelatinizing the outer layer (4) in a first oven (13);
applying an intermediate layer (5), which is made of a second plastic material, on the previously applied outer layer (4) by means of a second spreading device (14);
gelatinizing the intermediate layer (5) in a second oven (15) ;
applying a connection layer (6) made of a third plastic material by means of a third spreading device (16) and on the previously applied intermediate layer (5); and
gelatinizing the connection layer (6) in a third oven (17); the manufacturing method being **characterized in that** it comprises the further step of applying a noble layer (7), made of a fabric comprising wool fibres and having the inner surface (3), on the previously applied connection layer (6) by means of an applying device (18) arranged immediately downstream of the third oven (17).

15. A plant (8) for manufacturing a wall covering (1) having an outer surface (2) and an inner surface (3), which is opposite the outer surface (2); the manufacturing plant (8) comprising:
conveyor means for feeding a release liner sheet (9), which temporarily supports the wall covering (1) during the application and the gelatinization of the different layers (4, 5, 6, 7) and is recovered at the end of the processing cycle;
a first spreading device (12) for applying, on the release liner sheet (9), an outer layer (4), which is made of a first plastic material and has the outer surface (2);
a first oven (13) for gelatinizing the outer layer (4);
a second spreading device (14) for applying, on the previously applied outer layer (4), an intermediate layer (5), which is made of a second plastic material;
a second oven (15) for gelatinizing the intermediate layer (5) ;
a third spreading device (16) for applying, on the previously applied intermediate layer (5), a connection layer (6), which is made of a third plastic material; and
a third oven (17) for gelatinizing the connection layer (6) ;
the manufacturing plant (8) being **characterized in that** it comprises an applying device (18) arranged immediately downstream of the third oven (17) for applying on the previously applied connection layer (6) a noble layer (7), which is made of a fabric comprising wool fibres and has the inner surface (3).
